# EUROPEAN PATENT APPLICATION

(11) **EP 4 318 255 A1**
(43) Date of publication of application: **07.02.2024**
(21) Application number: 22781738.4
(22) Date of filing: 28.01.2022
(51) Int. Cl.: G06F 15/78, G06F 9/455, G06F 30/20

(54) **METHOD AND SYSTEM FOR THE INTERACTION OF PROGRAMS AND DEVICES WITH THE AID OF A CONTROL PLATFORM**

(30) Priority: 29.03.2021 RU 2021108415
(71) Applicant: Gurin, Oleg Dmitrievich, Suzdal, 601283 (RU); Lebedev, Kirill Borisovich, Moscow, 119454 (RU)
(72) Inventor: Gurin, Oleg Dmitrievich, Suzdal, 601283 (RU); Lebedev, Kirill Borisovich, Moscow, 119454 (RU)
(74) Representative: Osmans, Voldemars
(86) International application number: PCT/RU2022/050027
(87) International publication number: WO 2022/211676

(57) **Abstract**

This solution relates to the field of computer technology, in particular to methods and systems of interaction of devices and programs through a control platform using digital twin technology (DT). The technical result of the invention is an efficient data exchange between clients of various types connected to the control platform through digital twins. The claimed technical result is achieved by implementing a method of interaction of programs and devices using a control platform. The method contains stages at which:
the initial connection of a client to a control platform is performed, while the client is a device or software application;
a primary message from the client to the platform with information to create a digital twin (DT) is sent;
the client's DT is formed on the control platform, which contains at least information about the type of data processed by the client, message format generated by the client, and the current state of the client;
the states of the connected client and its DT on the control platform during the exchange of messages between clients of the control platform are synchronized;
extraction and enrichment of useful data received in messages from the client, and the useful data is presented in a structured form after being processed by the generated DT;
messages in the form of structured data are converted into a format accepted by the client.

## Description

### FIELD OF TECHNOLOGY

This solution relates to the field of computer technology, in particular to the method and system of interaction of devices and programs through a control platform using digital twin technology (DT).

### PRIOR ART

To date, centralized management of various tools, such as programs and devices in a single infrastructure, has a number of problems associated with the heterogeneity of protocols for communicating with various entities. It makes it necessary to develop unified rules and complex systems to ensure the required management of numerous data flows.

It is proposed to partially solve this problem by creating a centralized principle of communication between multiple devices, in particular Internet of Things (IoT) devices, by sending "tweets" containing metadata indicating the type of information processed and transmitted by the device, which will be described in DDL (Device Description Language) [1].

Patent application US 20170171143 A1 (International Business Machines Corp, 2017-06-15) proposes a method for organizing IoT devices using a message interpreter, which uses a message type template search and determines which data and from which types of devices are received by the central control system.

The disadvantage of such solutions is their low efficiency in terms of creating a universal method for managing various hardware and software solutions, using a centralized platform that provides unified data exchange.

### SUMMARY OF INVENTION

A claimed invention is aimed at solving a technical problem inherent in known approaches from the state of the art, as it provides a universal method of controlling devices and programs using a single platform.

The technical result of the invention is an efficient data exchange between clients of various types connected to the control platform through digital twins.

The claimed technical result is achieved by implementing a method of interaction of programs and devices using a control platform. The method contains stages at which:
the initial connection of a client to a control platform is performed, while the client is a device or software application;
a primary message from the client to the platform with information to create a digital twin (DT) is sent;
the client's DT is formed on the control platform, which contains at least information about the type of data processed by the client, message format generated by the client, and the current state of the client;
the states of the connected client and its DT on the control platform during the exchange of messages between clients of the control platform are synchronized;
extraction and enrichment of useful data received in messages from the client, and the useful data is presented in a structured form after being processed by the generated DT;
messages in the form of structured data into a format accepted by the client are converted;
data processing is performed using the DT when interacting with clients and DTs connected to the control platform to send information messages and/or commands.

In one embodiment of a method, the DT is located on the client and is transmitted to the control platform during the initial connection.

In one embodiment of the method, the DT is obtained by the control platform from an external source or from a DT templates library located on the control platform.

In one embodiment of the method, the client and the platform perform mutual authentication.

In one embodiment of the method, authentication occurs using symmetric and/or asymmetric cryptographic algorithms.

In one embodiment of the method, integrity verification mechanisms are additionally applied to the DT when it is transferred from the client to the control platform.

In one embodiment of the method, the DT is transmitted via a hyperlink stored on the client.

In one embodiment of the method, the control platform checks the technical condition and/or relevance of the client software based on its DT.

In one embodiment of the method, the DT provides software updates on the client when connected to the control platform.

In one embodiment of the method, the client is an Internet of Things (IoT) device.

In one embodiment of the method, the control platform is made with the possibility of delegating partial or full functionality to at least one connected client, and transferring the DT to at least one other client for subsequent messaging, using one of the connected clients as a gateway.

In one embodiment of the method, the control platform is designed with the possibility of dynamically reassigning clients used as gateways when managing a group of clients.

In one embodiment of the method, the connected client and the control platform contain pre-installed encryption keys.

In one embodiment of the method, encryption keys are used to authenticate clients on the control platform.

In one embodiment of the method, data exchange on the part of the connected client with the control platform is carried out using a binary protocol.

In one embodiment of the method, all the digital twins of connected clients transmit information to the control platform in a unified form.

In one embodiment of the method, messages between the client and the control platform are transmitted in a structured or unstructured form.

The claimed technical result is also achieved due to the system of interaction of programs and devices using the control platform. The system contains:
at least one client, which is a device or software application, made with the function to message the control platform;
a control platform able to exchange messages with at least one client;
create a digital twin (DT) of clients connected to the platform, and the DT contains at least information about the type of data processed by the client, the format of messages generated by the client, and the current state of the client;
synchronize the states of connected clients and their corresponding DTs during messaging;
extract and enrich useful data received in messages from the client, and the useful data is presented in a structured form after being processed by the generated DT;
convert messages with structured data into a format accepted by the client;
process data using the DT when interacting with clients and DTs connected to the control platform to send information messages and/or commands.

In one embodiment of a system, the DT is located on the client and is transmitted to the control platform during the initial connection.

In one embodiment of the system, the DT is obtained by the control platform from an external source or from a DT templates library located on the control platform.

In one embodiment of the system, the client and the platform perform mutual authentication.

In one embodiment of the system, authentication occurs using symmetric and/or asymmetric cryptographic algorithms.

In one embodiment of the system, integrity verification mechanisms are additionally applied to the DT when it is transferred from the client to the control platform.

In one embodiment of the system, the DT is transmitted via a hyperlink stored on the client.

In one embodiment of the system, the control platform checks the technical condition and/or relevance of the client software based on its DT.

In one embodiment of the system, the DT provides software updates on the client when connected to the control platform.

In one embodiment of the system, the client is an Internet of Things (IoT) device.

In one embodiment of the system, the control platform is made with the possibility of delegating partial or full functionality to at least one connected client, and transferring the DT to at least one other client for subsequent messaging, using one of the connected clients as a gateway.

In one embodiment of the system, the control platform is designed with the possibility of dynamically reassigning clients used as gateways when managing a group of clients.

In one embodiment of the system, the connected client and the control platform contain pre-installed encryption keys.

In one embodiment of the system, encryption keys are used to authenticate clients on the control platform.

In one embodiment of the system, data exchange on the part of the connected client with the control platform is carried out using a binary protocol.

In one embodiment of the system, all the digital twins of connected clients transmit information to the control platform in a unified form.

In one embodiment of the system, messages between the client and the control platform are transmitted in a structured or unstructured form.

### BRIEF DESCRIPTION OF DRAWINGS

Figures 1A-1B show the general view of the claimed solution scheme.
Figure 2 shows a flowchart of the method of connecting clients to the control platform.
Figure 3 shows an example of transferring the functions of digital twins to the client and using it as a gateway.
Figure 4 shows an example of a computing device.

### DETAILED DESCRIPTION OF THE INVENTION

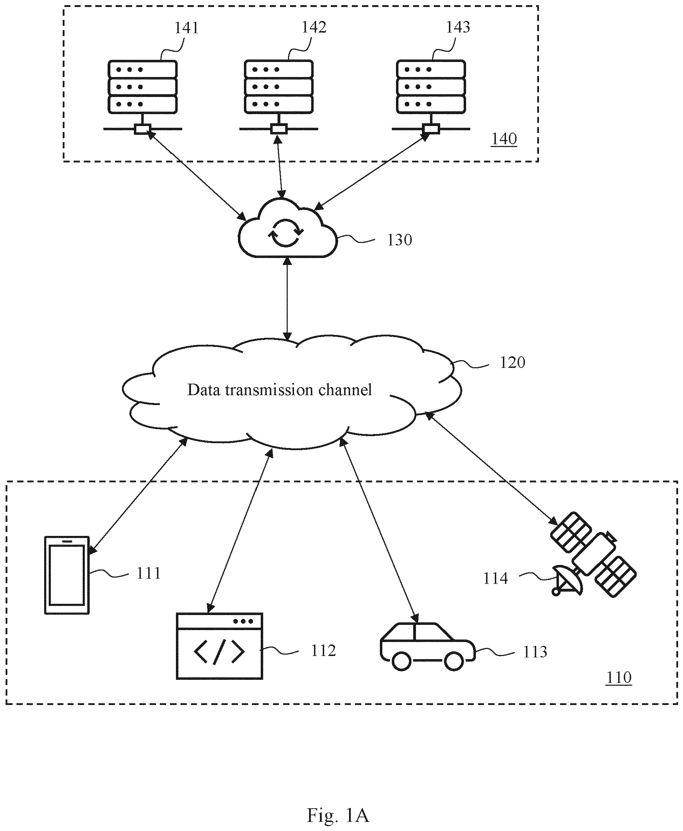

Figure 1A shows a diagram of the claimed solution, which contains a control platform (130) connected to a set of clients (111-114) by a data transmission channel (120). Each client (111-114) is a device or software application that can interact both with each other and through centralized control via the platform (130). A control platform (130) can be a software application implemented on one or more computing devices, for example, on a server, mainframe or server cluster, or any other type of device that provides the functionality of the platform (130).

Clients can be represented by various devices and software applications from various technical fields, for example, IoT. IoT and connected devices are very diverse, which results in their different needs for communication channels and protocols. For example, a wireless temperature sensor, an actuator, a sensor, a SoC, mobile devices, smart wearable devices, routers, portable computing devices, televisions, game consoles, various software applications, satellite communication devices, a car from a car sharing service, and so on. Thus, clients differ greatly both in their data traffic needs and in the ability to process it. For example, consider a wireless temperature sensor and a connected car. The temperature sensor is activated every hour and it sends the measurement results over the radio channel. For such devices, it is important to save radio resources (airwaves), since the number of sensors can be significant, the transmission is energy-consuming, and the amount of useful data is extremely small (a few bytes). The power supply resource is also very limited, since power can be supplied from a small-capacity battery or cell for a long time. In contrast to the temperature sensor, a connected car transmits a large amount of data in real time, while the power supply is almost unlimited.

IoT devices can be selected from a wide range of well-known solutions for information exchange, for example: sensors, actuators, smartphones, tablets, TVs, game consoles, computers, laptops, terminals, mainframes, various types of measuring devices (thermometers, manometers, counters, etc.). The presented range of devices is only an example for this technical solution, and other devices that can be equipped with the necessary hardware and software logic for interaction in the IoT environment can be used.

Based on this, different protocols are often used for different types of devices, which are most suitable for each case, and it complicates the process of configuring and then connecting them to a single network and managing them effectively.

As for the data transmission channel (120), various types of wired and/or wireless communication can be used, for example, the Internet, Intranet, radio channel (Bluetooth, BLE, IrDA), LAN, WLAN, WAN, etc.

As shown in Fig. 1A, the control platform (130) it can additionally communicate with external systems (141-143), which can be represented by various data storages, management systems, Smart Home systems, etc.

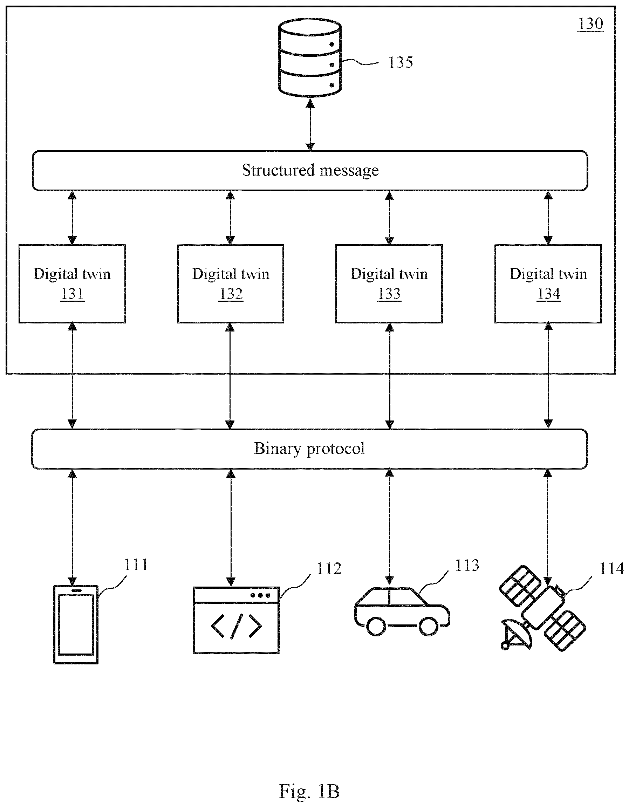

As shown in Fig. 1B, the control platform (130) contains a DT (131-134) for each connected client (111-114). The control platform can be implemented, for example, in the form of a server (130) or placed as software logic on any suitable computing device. Each DT (131-134) communicates with the corresponding client (111-114) in the most efficient way, allowing to speed up and unify the reception and transmission of messages.

The DT (131-134) is a set of metadata that is associated with the client (111-114) and reflects its current state, for example, its ID, firmware version, device type, program type, various constants, variables, secrets, configuration (the change of which tells the platform that the next communication session needs its update on the device/client), and information about the set and message formats for payload that can be sent or received. Useful data or payload refers to a part of a data packet without service information (header, synchronization bits, etc.), that is, it is essential data transmitted as a single block to the target recipient.

The DT (131-134) can contain a wide range of information about the client (111-114), in particular, the structure of messages, current state, logic of work and communication, other algorithms and characteristics necessary for the control platform (130) to communicate with the client (111-114) and other DTs. Thus, this approach allows us to use a single protocol in which useful data is encapsulated (an individual subprotocol) for various clients without losing the efficiency of information exchange between multiple devices. In particular, existing protocols based on structured data consider the overhead costs of transmission insignificant, as a result, to send, for example, 1 kilobyte of useful data (for example, measurement values of some sensor), it often takes 10-100 kilobytes per packet, because each value will be accompanied by a name, description, format and other information, and the data itself will be presented as a text string instead of a binary format. This leads to a significant decrease in efficiency. The claimed method of applying the DT directly on the control platform (130) allows you to add metadata on the platform itself (130), where problems with channels and traffic are not relevant, while reducing the speed of data delivery to the end customer.

The claimed solution allows to implement a protocol for interacting with various clients (IoT, Servers, and Applications). The data exchange protocol between clients (111-114) and the management platform (130) is binary, but messages of an undefined format can be sent as useful data, which can be either binary or structured. The problem with sending binary data is that it does not contain any information about its structure and the control platform (130) does not know in advance how to form and process such data. Also, the control platform (130) does not know in advance what states and configurations the client may have (111-114). In order to solve this problem, a DT (131-134) is used, which provides seamless data exchange with the client (111-114), without the need for additional configuration of each individual client (111-114). The DT (131-134) generates structured messages and transfers them to the repository (135).

The repository (135) can be of a centralized or decentralized type, for example, a database, a distributed registry (blockchain), file storage, RAID array, etc. The repository (135) is used for subsequent information exchange between the control platform (130) and external systems (140).

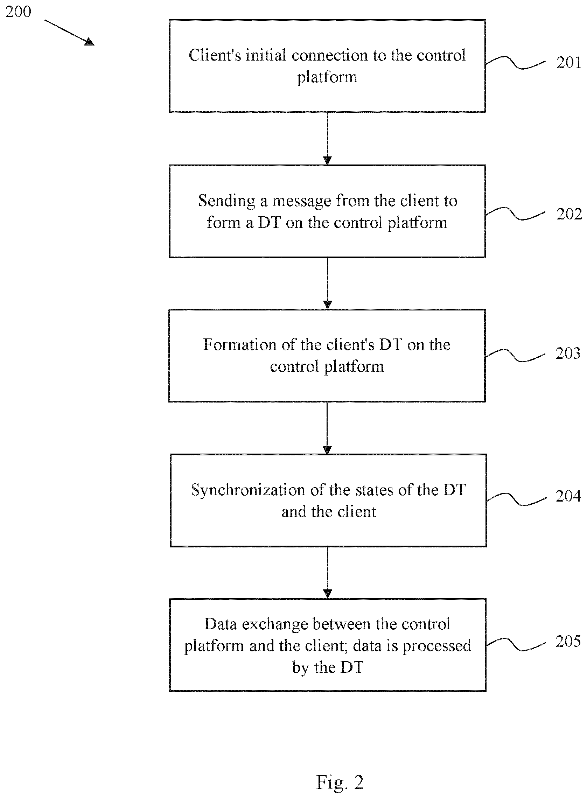

Fig. 2 shows a flowchart of the proposed method (200) for managing clients (111-114) through the use of a DT (131-134) on the control platform (130).

At the first stage (201), the initial connection of the client (111-114) to the control platform (130) is performed. The initial connection can be performed, for example, when the client is paired with the control platform (130), the application is registered, or in some other way that allows sending a signal or data to the control platform (130).

At the next stage (202), after the control platform (130) receives a message from the client, for example, (111), its DT (131) is formed. The DT (131) can be formed in various ways, in particular, information for downloading the DT (131) (for example, a hyperlink, QR code, etc.) from an external source can be transmitted from the client (111) at the stage (202), or the DT (131) can be taken from the template library, which can be stored on the control platform (130) or an external resource. In another example, the DT template (131) can be stored directly on the client itself (111) and transmitted at the stage (202) for storage on the control platform (130).

At the stage (203), the DT (131) is formed for the client (111), which will allow for effective subsequent interaction with it, and let you have operational access to information about the DT (131) state based on the current state of the client (111). The DT (131) initially contains the following information: the type of data processed by the client, the message format generated by the client, and the current state of the client. Additionally, the DT (131) may contain other data, for example, the current client configuration, firmware version, operability status, etc.

One of the main tasks of the DT (131) is to ensure the analysis of useful data received from the client (111). The DT (131) provides a unified data exchange between the client (111) and the control platform (130) without the need to adjust the protocol to receive useful data from the client (111), since the DT (131) will provide further interpretation of the data during the exchange. The DTs (131-134) of connected clients transmit information to the control platform (130) in a unified form, while messages between clients (111-114) and the control platform (130) can be transmitted in a structured or unstructured form.

Due to the DT (131), it becomes possible to exchange useful data in binary format between the client (111) and the control platform (130); with the help of the DT (131) the data can be converted into structured format (YML, JSON, XML, etc.), and also be subsequently enriched with information about the structure and metadata for further transmission to a business logic system, for example, one of the external systems (140). Also, structured messages (YML, JSON, XML, etc.) received from external systems (140) can be converted into a binary message and transmitted to the corresponding client (111-114).

At the stage (204), the states of the client (111) and its DT (131) are synchronized, during which, for example, the current state of the client (111), the version of its software and/or firmware, operational update of parameters, etc. are checked. Given that clients (111-114) can change their functionality (in particular, it is critical for software applications), it is necessary to promptly monitor changes and the content of useful data when exchanging with the control platform (130). When updating the hardware or software states of clients (111-114), the relevant information will also be reflected by updating the associated DT template (131-134).

At the next stage (205), when data is exchanged between clients (111-114) and their DTs (131-134), the useful data received in messages from clients (111-114) is extracted and enriched, while the useful data is already presented in a structured form, after being processed by the formed DT (131-134). The messages are transformed into a format accepted by each type of client (111-114).

When performing the initial connection of clients (111-114) to the control platform (130) their mutual authentication can be performed, for example, by exchanging cryptographic keys formed using symmetric and/or asymmetric cryptographic algorithms. Encryption keys can be pre-installed on the corresponding client and control platform, for example, using the method described in the patent [2]. In particular cases, an integrity check mechanism may additionally be applied to the DT (131-134) when it is transferred from the client to the control platform (130). An electronic signature, a secret key, etc. can be used to perform such integrity checks.

As mentioned above, the control platform (130) can be implemented on various types of computing devices, while the control platform (130) can be executed with the possibility of delegating partial or full functionality to at least one connected client, and transferring the DT to at least one other client for subsequent messaging, using one of the connected clients as a gateway.

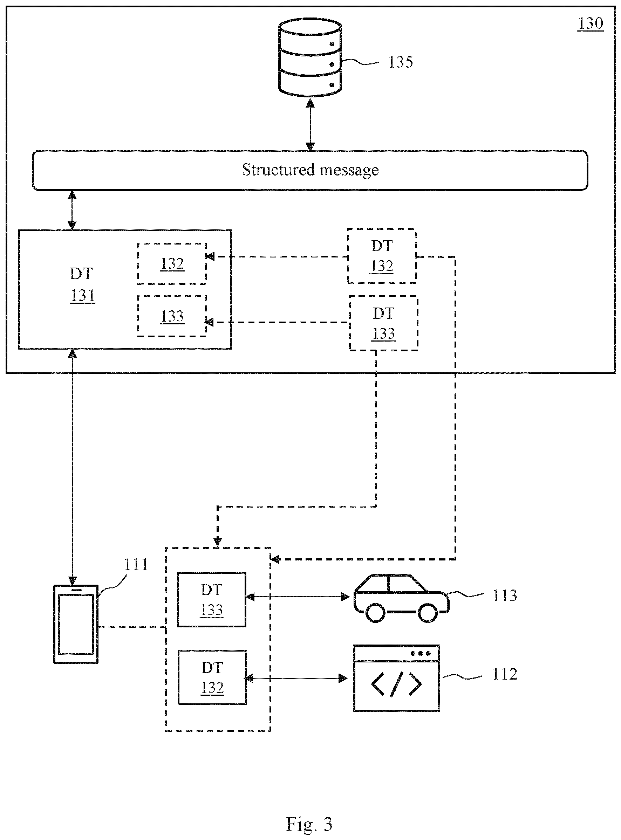

Fig. 3 shows an example in which the control platform (130) can use the client (111) as a gateway for receiving data from one or more other clients (112, 113), while the DT (132, 133) of the corresponding clients is transmitted to the client (111) for interpreting the exchange of messages between clients (112, 113) and the control platform (130). Each client (111-114) selected as a gateway can be dynamically reassigned by the control platform (130), which allows efficient management of a group of clients.

The approach implying the transfer of functionality to the client (111) is due to the transfer of the logic and functionality of the DT closer to other clients, for example, when it is necessary to make autonomous decisions that do not depend on the Internet connection in a particular location. Thus, transferring a DT to a client, for example, a computer, allows performing and solving communication and decision-making tasks locally in the coverage area of the said computer, independently from the control platform (130). As one of the cases of this approach, we can consider a smart home containing a local gateway to control smart home elements. The gateway provides control of heaters regardless of whether there is an Internet connection inside the house.

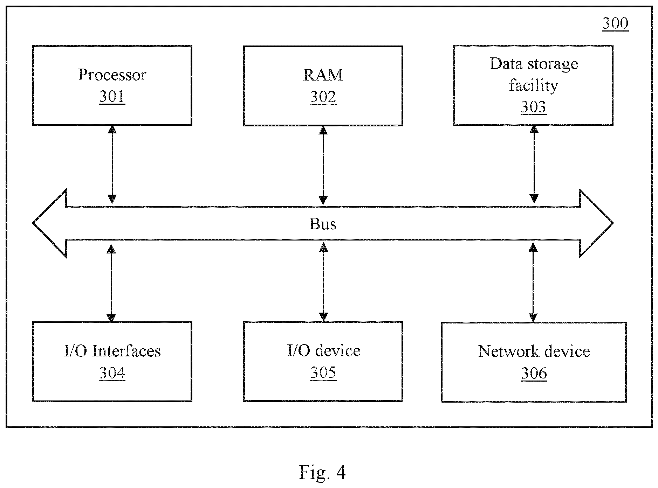

Fig. 4 shows a general example of a computing system based on a computing device (300), for example, a computer, server, laptop, smartphone, etc., which can be used for the full or partial embodiment of the claimed solution (100). In general, the device (300) contains components such as one or several processors (301), at least one RAM (302), a permanent data storage facility (303), I/O interfaces (304), I/O facility (305), and networking device (306).

The processor (301) of the device performs basic computing operations necessary for the functioning of the device (300) or one or more of its components. The processor (301) executes the necessary machine-readable commands contained in the RAM (302).

Memory (302), for example, is embodied as RAM and contains the necessary software providing required functionality. The data storage facility (303) can be embodied as HDD, SSD disks, raid array, network storage, flash memory, optical information drives (CD, DVD, MD, Blue-Ray disks), etc. The facility (303) allows long-term storage of various types of information, for example, request processing history (logs), user IDs, camera data, images, etc.

Interfaces (304) are standard means for connecting and working with various devices. Interfaces (304) can be, for example, USB, RS232, RJ45, LPT, COM, HDMI, PS/2, Lightning, FireWire, etc. The choice of interfaces (304) depends on the specific design of the device (300), which can be a personal computer, mainframe, server cluster, thin client, smartphone, laptop, etc., and connected third-party devices.

As a means of data I/O (305), the following devices can be used: keyboard, joystick, display (touch display), projector, touchpad, mouse manipulator, trackball, light pen, speakers, microphone, etc.

The network device (306) can be selected from a device that provides network reception and data transmission, for example, an Ethernet card, a WLAN/Wi-Fi module, a Bluetooth module, a BLE module, an NFC module, an IrDA, an RFID module, a GSM modem, etc. Using the means (306), the organization of data exchange over a wired or wireless data transmission channel is provided, for example, WAN, PAN, LAN, Intranet, Internet, WLAN, WMAN or GSM, LPWAN, quantum data transmission channel, satellite communication, etc.

The components of the device (300) are usually connected via a common data bus.

In these application materials, the preferred embodiment of the proposed technical solution was presented, which should not be used as limiting other, private embodiments of its implementation, which do not go beyond the requested scope of legal protection and are obvious to specialists in the relevant field of technology.

### Sources:

[1] Khaled et al. IoT-DDL-Device Description Language for the "T" in IoT. Digital Object Identifier 10. 1109/ACCESS. 2017.Doi Number.
[2] Patent RU 2695487 C1 "METHOD AND SYSTEM FOR INTERACTION OF DEVICES OF INTERNET OF THINGS (IOT)". O. D. Gurin, published 23.07.2019.

## Claims

1. A method of interaction of programs and devices using a control platform, the method contains the following stages:
performing an initial connection of a client to a control platform, wherein the client is a device or software application;
sending a primary message from the client to the control platform, wherein the primary message contains an information to create a digital twin (DT);
forming the client's DT on the control platform, wherein the DT contains at least information about the type of data processed by the client, message format generated by the client, and the current state of the client;
synchronizing the states of the connected client and its DT on the control platform during the exchange of messages between clients of the control platform;
performing extraction and enrichment of useful data received in messages from the client, wherein the useful data is presented in a structured form after being processed by the generated DT;
converting the messages in the form of structured data into a format accepted by the client;
performing data processing using the DT when interacting with clients and DTs connected to the control platform to send information messages and/or commands.

2. The method according to claim 1, wherein the DT is located on the client and is transmitted to the control platform during the initial connection.

3. The method according to claim 1, wherein the control platform obtains the DT from an external source or from a library of DT templates located on the control platform.

4. The method according to claim 1, wherein the client and the platform perform mutual authentication.

5. The method according to claim 4, wherein the authentication process using symmetric and/ or asymmetric cryptographic algorithms.

6. The method according to claim 2, wherein integrity verification mechanisms are additionally applied to the DT when it is transferred from the client to the control platform.

7. The method according to claim 2, wherein the DT is transmitted via a hyperlink stored on the client.

8. The method according to claim 1, wherein the control platform checks the technical condition and/or relevance of the client software based on its DT.

9. The method according to claim 8, wherein the DT provides software updates on the client when connected to the control platform.

10. The method according to claim 1, wherein the client is an Internet of Things (IoT) device.

11. The method according to claim 1, wherein the control platform is made with the possibility of delegating partial or full functionality to at least one connected client, and transferring the DT to at least one other client for subsequent messaging, using one of the connected clients as a gateway.

12. The method according to claim 11, wherein the control platform is made with the possibility of dynamically reassigning clients used as gateways when managing a group of clients.

13. The method according to claim 5, wherein the connected client and the control platform contain pre-installed encryption keys.

14. The method according to claim 13, wherein the encryption keys are used to authenticate clients on the control platform.

15. The method according to claim 1, wherein the data exchange from the connected client with the control platform is carried out using a binary protocol.

16. The method according to claim 1, wherein all the DTs of connected clients transmit information to the control platform in a unified form.

17. The method according to claim 1, wherein messages between the client and the control platform are transmitted in a structured or unstructured form.

18. A system of interaction between programs and devices using a control platform containing:
at least one client, which is a device or software application, which is exchanging messages with the control platform;
the control platform that is able to:
exchange messages with at least one client;
create a digital twin (DT) of clients connected to the platform, and the DT contains at least information about the type of data processed by the client, the format of messages generated by the client, and the current state of the client;
synchronize the states of connected clients and their corresponding DTs during messaging;
extract and enrich useful data received in messages from the client, and the useful data is presented in a structured form after being processed by the generated DT;
convert messages with structured data into a format accepted by the client;
process data using the DT when interacting with clients and DTs connected to the control platform to send information messages and/or commands.

19. The system according to claim 18, wherein the DT is located on the client and is transmitted to the control platform during the initial connection.

20. The system according to claim 18, wherein the control platform obtains the DT from an external source or from a library of DT templates located on the control platform.

21. The system according to claim 18, wherein the client and the platform perform mutual authentication.

22. The system according to claim 21, wherein the authentication process using symmetric and/or asymmetric cryptographic algorithms.

23. The system according to claim 20, wherein integrity verification mechanisms are additionally applied to the DT when it is transferred from the client to the control platform.

24. The system according to claim 20, wherein the DT is transmitted via a hyperlink stored on the client.

25. The system according to claim 18, wherein the control platform checks the technical condition and/or relevance of the client software based on its DT.

26. The system according to claim 25, wherein the DT provides software updates on the client when connected to the control platform.

27. The system according to claim 18, wherein the client is an Internet of Things (IoT) device.

28. The system according to claim 18, wherein the control platform is made with the possibility of delegating partial or full functionality to at least one connected client, and transferring the DT to at least one other client for subsequent messaging, using one of the connected clients as a gateway.

29. The system according to claim 28, wherein the control platform is made with the possibility of dynamically reassigning clients used as gateways when managing a group of clients.

30. The system according to claim 28, wherein the connected client and the control platform contain pre-installed encryption keys.

31. The system according to claim 30, wherein the encryption keys are used to authenticate clients on the control platform.

32. The system according to claim 18, wherein the data exchange from the connected client to the control platform is carried out using a binary protocol.

33. The system according to claim 18, wherein all the DTs of connected clients transmit information to the control platform in a unified form.

34. The system according to claim 18, wherein messages between the client and the control platform are transmitted in a structured or unstructured form.
